# EUROPEAN PATENT APPLICATION

(11) **EP 4 836 519 A1**
(43) Date of publication of application: **04.11.2026**
(21) Application number: 25751130.3
(22) Date of filing: 17.01.2025
(51) Int. Cl.: H04W 36/00

(54) **COMMUNICATION METHOD AND COMMUNICATION APPARATUS**

(30) Priority: 07.02.2024 CN 202410174085
(71) Applicant: Huawei Technologies Co., Ltd., Shenzhen, Guangdong 518129 (CN)
(72) Inventor: HUANG, Xiuxuan, Shenzhen, Guangdong 518129 (CN); LI, Xinxian, Shenzhen, Guangdong 518129 (CN); DING, Mengying, Shenzhen, Guangdong 518129 (CN); YU, Xichen, Shenzhen, Guangdong 518129 (CN); PENG, Jinlin, Shenzhen, Guangdong 518129 (CN); MADIER, Louis, Shenzhen, Guangdong 518129 (CN)
(74) Representative: Isarpatent
(86) International application number: PCT/CN2025/073069
(87) International publication number: WO 2025/167528

(57) **Abstract**

This application provides a communication method and apparatus, which can be applied to carrier aggregation scenarios, to reduce power consumption of a network device and improve system performance. The method includes: A network device periodically sends an SSB signal to a terminal device on at least one candidate cell; the terminal device generates a first measurement result based on the SSB signal, and sends the first measurement result to the network device, so that the network device stops periodically sending the SSB signal after receiving the first measurement result, determines at least one secondary cell for the terminal device from the at least one candidate cell based on the first measurement result, and then indicates the at least one secondary cell to the terminal device by using identification information of at least one cell in first configuration information; and after receiving the first configuration information, the terminal device configures, as a secondary cell, at least one cell corresponding to the identification information of the at least one cell.

## Description

This application claims priority to Chinese Patent Application No. 202410174085.9, filed with the China National Intellectual Property Administration on February 7, 2024 and entitled "COMMUNICATION METHOD AND COMMUNICATION APPARATUS", which is incorporated herein by reference in its entirety.

### TECHNICAL FIELD

This application relates to the field of wireless communication, and more specifically, to a communication method and a communication apparatus.

### BACKGROUND

In carrier aggregation (carrier aggregation, CA) technology, a primary cell (primary cell, PCell) is responsible for radio resource control (radio resource control, RRC) communication with a user equipment (user equipment, UE). A secondary cell (secondary cell, SCell) is added during RRC reconfiguration, to provide additional radio resources. After the secondary cell is configured, the secondary cell is in an inactive state by default. When an activation procedure of the secondary cell is started, the user equipment activates the secondary cell based on a synchronization signal (synchronization signal, SS) and physical broadcast channel (physical broadcast channel, PBCH) block (block), namely, an SSB signal, on the activated secondary cell.

Currently, a network device continuously transmits SSB signals in a broadcast manner, resulting in high power consumption of the network device.

### SUMMARY

This application provides a communication method and apparatus, to reduce power consumption of a network device and improve system performance.

According to a first aspect, an embodiment of this application provides a communication method. The method may be performed by a network device, or may be performed by a component (for example, a chip, a chip system, or a circuit) of the network device. This is not limited in this application. For ease of description, the following uses an example in which the network device performs the method for description. The method includes: periodically sending a synchronization signal and physical broadcast channel block SSB signal on at least one candidate cell; receiving a first measurement result from a terminal device, where the first measurement result is generated by measuring the SSB signal; stopping periodically sending the SSB signal; and sending first configuration information to the terminal device, where the first configuration information includes identification information of at least one cell, the first configuration information indicates to configure, as a secondary cell, at least one cell corresponding to the identification information of the at least one cell, and the at least one cell is determined from the at least one candidate cell based on the first measurement result.

Based on the foregoing solution, the network device stops periodic sending of the SSB signal on the candidate cell, to reduce power consumption and reduce a resource waste.

With reference to the first aspect, in some implementations of the first aspect, the method further includes: receiving first indication information from the terminal device, where the first indication information indicates to periodically send the SSB signal on the at least one secondary cell; periodically sending the SSB signal on the at least one secondary cell based on the first indication information; and sending second indication information to the terminal device, where the second indication information indicates to activate the at least one secondary cell.

Based on the foregoing solution, the first indication information of the terminal device is used for triggering the network device to resend the SSB signal on the secondary cell, to activate the secondary cell.

With reference to the first aspect, in some implementations of the first aspect, before the sending the second indication information to the terminal device, the method further includes: receiving a second measurement result from the terminal device, where the second measurement result is generated by measuring the SSB signal on the at least one secondary cell.

Based on the foregoing solution, the second measurement result is reported before an activation instruction (and the second indication information), so that the terminal device can quickly complete activation of the secondary cell after receiving the second indication information, thereby reducing a delay in an activation process of the secondary cell, and avoiding resource congestion that may be caused when second measurement is reported.

With reference to the first aspect, in some implementations of the first aspect, the method further includes: periodically sending the SSB signal on at least one secondary cell; sending third indication information to the terminal device, where the third indication information indicates the terminal device to periodically receive the SSB signal on the at least one secondary cell; and sending fourth indication information to the terminal device, where the fourth indication information indicates to activate the at least one secondary cell.

Based on the foregoing solution, the third indication information of the network device is used for triggering the network device to resend the SSB signal on the secondary cell, to activate the secondary cell.

With reference to the first aspect, in some implementations of the first aspect, before the sending the fourth indication information to the terminal device, the method further includes: receiving a third measurement result from the terminal device, where the third measurement result is generated by measuring the SSB signal on the at least one secondary cell.

Based on the foregoing solution, the third measurement result is reported before an activation instruction (and the fourth indication information), so that the terminal device can quickly complete activation of the secondary cell after receiving the fourth indication information, thereby reducing a delay in an activation process of the secondary cell, and avoiding resource congestion that may be caused when third measurement is reported.

With reference to the first aspect, in some implementations of the first aspect, the method further includes: sending configuration information of the SSB signal on the at least one secondary cell to the terminal device.

With reference to the first aspect, in some implementations of the first aspect, the configuration information of the SSB signal on the at least one secondary cell and the first configuration information are carried in a same message.

Based on the foregoing solution, the configuration information of the secondary cell and the first configuration information are carried in a same message, so that a delay in sending the configuration information of the secondary cell can be reduced, and system performance can be improved.

According to a second aspect, an embodiment of this application provides a communication method. The method may be performed by a terminal device, or may be performed by a component (for example, a chip, a chip system, or a circuit) of the terminal device. This is not limited in this application. For ease of description, the following uses an example in which the terminal device performs the method for description. The method includes: periodically receiving a synchronization signal and physical broadcast channel block SSB signal on at least one candidate cell; sending a first measurement result to a network device, where the first measurement result is generated by measuring the SSB signal; stopping periodically receiving the SSB signal; and receiving first configuration information from the network device, where the first configuration information includes identification information of at least one cell, the first configuration information indicates to configure, as a secondary cell, at least one cell corresponding to the identification information of the at least one cell, and the at least one cell is determined from the at least one candidate cell based on the first measurement result.

With reference to the second aspect, in some implementations of the second aspect, the method further includes: sending first indication information to the network device, where the first indication information indicates the network device to periodically send the SSB signal on at least one secondary cell; periodically receiving the SSB signal on the at least one secondary cell based on the first indication information; and receiving second indication information from the network device, where the second indication information indicates to activate the at least one secondary cell.

With reference to the second aspect, in some implementations of the second aspect, before the receiving the second indication information from the network device, the method further includes: sending a second measurement result to the network device, where the second measurement result is generated by measuring the SSB signal on the at least one secondary cell.

With reference to the second aspect, in some implementations of the second aspect, the method further includes: receiving third indication information from the network device, where the third indication information indicates to receive the SSB signal on the at least one secondary cell; periodically receiving the SSB signal on the at least one secondary cell based on the third indication information; and receiving fourth indication information from the network device, where the fourth indication information indicates to activate the at least one secondary cell.

With reference to the second aspect, in some implementations of the second aspect, before the receiving the fourth indication information from the network device, the method further includes: sending a third measurement result to the network device, where the third measurement result is generated by measuring the SSB signal on the at least one secondary cell.

With reference to the second aspect, in some implementations of the second aspect, the method further includes: receiving configuration information of the SSB signal on the at least one secondary cell from the network device.

With reference to the second aspect, in some implementations of the second aspect, the configuration information of the SSB signal on the at least one secondary cell and the first configuration information are carried in a same message.

According to a third aspect, an embodiment of this application provides a communication apparatus. The communication apparatus is configured to perform any one of the first aspect and the implementations of the first aspect. Specifically, the communication apparatus includes a processor. The processor is configured to invoke and run a computer program, to cause the communication apparatus to perform any one of the first aspect and the implementations of the first aspect. Optionally, the communication apparatus further includes a memory, and the memory is configured to store the computer program.

According to a fourth aspect, an embodiment of this application provides a communication apparatus. The communication apparatus is configured to perform any one of the second aspect and the implementations of the second aspect. Specifically, the communication apparatus includes a processor. The processor is configured to invoke and run a computer program, to cause the communication apparatus to perform any one of the second aspect and the implementations of the second aspect. Optionally, the communication apparatus further includes a memory, and the memory is configured to store the computer program.

According to a fifth aspect, an embodiment of this application provides a communication apparatus. The communication apparatus is configured to perform the method according to any one of the first aspect and the implementations of the first aspect. Specifically, the communication apparatus may include a unit and/or a module (for example, a processing unit and a transceiver unit) configured to perform the method according to any one of the first aspect and the implementations of the first aspect.

In an implementation, the communication apparatus may be a network device. The transceiver unit may be a transceiver or an input/output interface. The processing unit may be at least one processor. Optionally, the transceiver may be a transceiver circuit. Optionally, the input/output interface may be an input/output circuit.

In another implementation, the communication apparatus may be a chip, a chip system, or a circuit in a device. In this case, the transceiver unit may be an input/output interface, an interface circuit, an output circuit, an input circuit, a pin, a related circuit, or the like on the chip, the chip system, or the circuit; and the processing unit may be at least one processor, processing circuit, logic circuit, or the like.

According to a sixth aspect, an embodiment of this application provides a communication apparatus. The communication apparatus is configured to perform the method according to any one of the second aspect and the implementations of the second aspect. Specifically, the communication apparatus may include a unit and/or a module (for example, a processing unit and a transceiver unit) configured to perform the method according to any one of the second aspect and the implementations of the second aspect.

In an implementation, the communication apparatus may be a terminal device. The transceiver unit may be a transceiver or an input/output interface. The processing unit may be at least one processor. Optionally, the transceiver may be a transceiver circuit. Optionally, the input/output interface may be an input/output circuit.

In another implementation, the communication apparatus may be a chip, a chip system, or a circuit in a device. In this case, the transceiver unit may be an input/output interface, an interface circuit, an output circuit, an input circuit, a pin, a related circuit, or the like on the chip, the chip system, or the circuit; and the processing unit may be at least one processor, processing circuit, logic circuit, or the like.

According to a seventh aspect, an embodiment of this application provides a processor, configured to perform the method according to at least one of the first aspect and the second aspect.

Operations such as sending and obtaining/receiving related to the processor may be understood as operations such as outputting, receiving, and inputting of the processor or sending and receiving operations performed by a radio frequency circuit and an antenna, unless otherwise specified, or provided that the operations do not contradict actual functions or internal logic of the operations in related descriptions. This is not limited in this application.

According to an eighth aspect, an embodiment of this application provides a computer program product including instructions. When the computer program product is run on a computer, the computer is caused to perform the method according to at least one of the first aspect and the second aspect and any implementation in each aspect.

According to a ninth aspect, an embodiment of this application provides a communication system, including the first communication device in the third aspect and the second communication device in the fourth aspect.

According to a tenth aspect, a chip is provided. The chip includes a processor and a communication interface, and the processor reads instructions via the communication interface, to perform the method according to at least one of the first aspect and the second aspect and any implementation in each aspect.

Optionally, in an implementation, the chip further includes a memory. The memory stores a computer program or instructions. The processor is configured to execute the computer program or the instructions stored in the memory. When the computer program or the instructions are executed, the processor is configured to perform the method according to at least one of the first aspect and the second aspect and any implementation in each aspect.

According to an eleventh aspect, an embodiment of this application provides a computer-readable storage medium. The computer-readable storage medium stores a computer program. When the computer program is run on a communication apparatus, the communication apparatus is caused to perform the method according to at least one of the first aspect and the second aspect and any implementation in each aspect.

For technical effects of the second aspect to the eleventh aspect, refer to the technical effects of the first aspect. Details are not described herein again.

### BRIEF DESCRIPTION OF DRAWINGS

FIG. 1 is a diagram of a wireless communication system to which an embodiment of this application is applicable;
FIG. 2 is a diagram of carrier aggregation;
FIG. 3 is a diagram of a first communication method 300 according to an embodiment of this application;
FIG. 4 is a diagram of a second communication method 400 according to an embodiment of this application;
FIG. 5 is a diagram of a third communication method 500 according to an embodiment of this application;
FIG. 6 is a diagram of a fourth communication method 600 according to an embodiment of this application;
FIG. 7 is a diagram of a fifth communication method 700 according to an embodiment of this application;
FIG. 8 is a diagram of a sixth communication method 800 according to an embodiment of this application;
FIG. 9 is a schematic block diagram of a communication apparatus 900 according to an embodiment of this application;
FIG. 10 is a schematic block diagram of a communication apparatus 1000 according to an embodiment of this application;
FIG. 11 is a diagram of a structure of a communication apparatus 1100 according to an embodiment of this application; and
FIG. 12 is a diagram of a chip system 1200 according to an embodiment of this application.

### DESCRIPTION OF EMBODIMENTS

Before the solutions of this application are described, the following descriptions are provided.

First, in this application, "indication" may include a direct indication, an indirect indication, an explicit indication, and an implicit indication. When a piece of indication information is described as indicating A, it may be understood as that the indication information carries A, directly indicates A, or indirectly indicates A.

In this application, information indicated by the indication information is referred to as to-be-indicated information. In a specific implementation process, there are many manners of indicating the to-be-indicated information. For example, the manners include but are not limited to a manner in which the to-be-indicated information, for example, the to-be-indicated information or an index of the to-be-indicated information, may be directly indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement order of a plurality of pieces of information that is pre-agreed on (for example, stipulated in a protocol), to reduce indication overheads to some extent. In addition, the to-be-indicated information may be sent as a whole, or may be divided into a plurality of pieces of sub-information for separate sending, and sending periodicities and/or sending occasions of these pieces of sub-information may be the same or different.

Second, in this application, "sending" and "receiving" indicate signal transmission directions. For example, "sending information to XX" may be understood as that a destination end of the information is XX, and may include direct sending through an air interface, or include indirect sending via another unit or module through an air interface. "Receiving information from YY" may be understood as that a source end of the information is YY, and may include direct receiving from YY through an air interface, or may include indirect receiving from YY via another unit or module through an air interface. The "sending" may alternatively be understood as "outputting" of a chip interface, and the "receiving" may alternatively be understood as "inputting" of the chip interface. In other words, sending and receiving may be performed between devices, for example, between a network device and a terminal device, or may be performed in a device. For example, sending or receiving is performed between components, modules, chips, software modules, or hardware modules in a device through a bus, a wire, or an interface.

Third, in embodiments of this application, unless otherwise stated or there is a logic conflict, terms and/or descriptions in different embodiments are consistent and may be mutually referenced, and technical features in the different embodiments may be combined into a new embodiment based on an internal logical relationship thereof.

Fourth, in this application, "first" and "second" are merely for ease of description, and are intended to distinguish objects, but are not intended to limit the scope of embodiments of this application, and are not intended to describe an order or a sequence of features. It should be understood that objects described in such a way are interchangeable in an appropriate circumstance, so that a solution other than embodiments of this application can be described.

The following describes technical solutions of this application with reference to accompanying drawings.

The technical solutions provided in this application may be applied to various communication systems, such as a 5th generation (5th generation, 5G) system or a new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a 6th generation (6th generation, 6G) mobile communication system. The technical solutions provided in this application may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), and an internet of things (internet of things, IoT) communication system. The technical solutions provided in this application may be further applied to a low frequency scenario, a high frequency scenario, terahertz, optical communication, a licensed (licensed) frequency band, an unlicensed (unlicensed) frequency band, or the like.

The technical solutions provided in this application may be further applied to a non-terrestrial communication network (non-terrestrial network, NTN) system, for example, inter-satellite communication and satellite communication. For example, a satellite communication system includes a satellite base station and a terminal device. The satellite base station provides a communication service for the terminal device. The satellite base station may also communicate with a base station. A satellite may serve as a base station, or may serve as a terminal device. The satellite may be an uncrewed aerial vehicle, a hot air balloon, a low earth orbit satellite, a medium earth orbit satellite, a high earth orbit satellite, or the like. Alternatively, the satellite may be a non-terrestrial base station, a non-terrestrial device, or the like.

A device in the communication system may send a signal to another device or receive a signal from another device. The signal may include information, signaling, data, or the like. The device may be replaced with an entity, a network entity, a network element, a communication device, a communication module, a node, a communication node, or the like. In the present disclosure, the device is used as an example for description. For example, the communication system may include at least one terminal device and at least one network device. The network device may send a downlink signal to the terminal device, and/or the terminal device may send an uplink signal to the network device.

A terminal device in embodiments of this application includes various devices having a wireless communication function, and the terminal device may be configured to be connected to a person, an object, a machine, and the like. The terminal device may be widely used in various scenarios, such as cellular communication, D2D, V2X, peer-to-peer (peer-to-peer, P2P), M2M, MTC, IoT, virtual reality (virtual reality, VR), augmented reality (augmented reality, AR), industrial control, autonomous driving, telemedicine, a smart grid, smart furniture, a smart office, smart wearable, smart transportation, a smart city drone, a robot, remote sensing, passive sensing, positioning, navigation and tracking, and autonomous delivery. The terminal device may be a terminal in any one of the foregoing scenarios, for example, an MTC terminal or an IoT terminal. The terminal device may be a user equipment (user equipment, UE) in a 3rd generation partnership project (3rd generation partnership project, 3GPP) standard, a terminal (terminal), a fixed device, a mobile station (mobile station) device or a mobile device, a subscriber unit (subscriber unit), a handheld device, a vehicle-mounted device, a wearable device, a cellular phone (cellular phone), a smartphone (smartphone), a session initiation protocol (session initiation protocol, SIP) phone, a wireless data card, a personal digital assistant (personal digital assistant, PDA), a computer, a tablet computer, a notebook computer, a wireless modem, a handset (handset), a laptop computer (laptop computer), a computer having a wireless transceiver function, a smart book, a vehicle, a satellite, a global positioning system (global positioning system, GPS) device, a target tracking device, an aircraft (for example, an uncrewed aerial vehicle, a helicopter, a multi-helicopter, a quadcopter, or an airplane), a ship, a remote control device, a smart home device, an industrial device, an apparatus built in the foregoing device (for example, a communication module, a modem, or a chip in the foregoing device), or another processing device connected to a wireless modem. For ease of description, an example in which the terminal device is a terminal or a UE is used below for description.

It should be understood that, in some scenarios, the UE may be further configured to serve as a base station. For example, the UE may act as a scheduling entity that provides a sidelink signal between UEs in a scenario, for example, V2X, D2D, or P2P.

In embodiments of this application, an apparatus configured to implement a function of a terminal device, namely, a terminal apparatus, may be a terminal device, or may be an apparatus that can support the terminal device in implementing the function, for example, a chip system or a chip. The apparatus may be installed in the terminal device. In this embodiment of this application, the chip system may include a chip, or may include a chip and another discrete component.

A network device in embodiments of this application may be a device configured to communicate with the terminal device. The network device may also be referred to as an access network device or a radio access network device. For example, the network device may be a base station. The network device in embodiments of this application may be a radio access network (radio access network, RAN) node (or device) that connects the terminal device to a wireless network. The base station may cover the following various names in a broad sense, or may be replaced with the following names, such as a NodeB (NodeB), an evolved NodeB (evolved NodeB, eNB), a next generation NodeB (next generation NodeB, gNB), a relay station, an access point, a transmitting and receiving point (transmitting and receiving point, TRP), a transmission point, a primary station, a secondary station, a multi-standard radio (motor slide retainer, MSR) node, a home NodeB, a network controller, an access node, a radio node, an access point (access point, AP), a transmission node, a transceiver node, a baseband unit (baseband unit, BBU), a remote radio unit (remote radio unit, RRU), an active antenna unit (active antenna unit, AAU), a remote radio head (remote radio head, RRH), a central unit (central unit, CU), a distributed unit (distributed unit, DU), and a positioning node. The base station may be a macro base station, a micro base station, a relay node, a donor node, an analogue, or a combination thereof. The base station may alternatively be a communication module, a modem, or a chip arranged in the foregoing device or apparatus. The base station may alternatively be a mobile switching center, a device that bears a base station function in D2D, V2X, and M2M communication, a network side device in a 6G network, a device that bears a base station function in a future communication system, or the like. The base station may support networks of a same access technology or different access technologies. A specific technology and a specific device form that are used for the network device are not limited in embodiments of this application.

The base station may be fixed or mobile. For example, a helicopter or an uncrewed aerial vehicle may be configured as a mobile base station, and one or more cells may move based on a position of the mobile base station. In other examples, a helicopter or an uncrewed aerial vehicle may be configured as a device for communicating with another base station.

In some deployments, the network device mentioned in embodiments of this application may be a device including a CU or a DU or including a CU and a DU, or a device including a CU control plane (a central unit-control plane (central unit-control plane, CU-CP)) node, a CU user plane (a central unit-user plane (central unit-user plane, CU-UP)) node, and a DU node. For example, the network device may include a gNB-CU-CP, a gNB-CU-UP, and a gNB-DU. The CU herein completes functions of a radio resource control protocol and a packet data convergence protocol (packet data convergence protocol, PDCP) of the base station, and may further complete a function of a service data adaptation protocol (service data adaptation protocol, SDAP). The DU completes functions of a radio link control layer and a medium access control (medium access control, MAC) layer of the base station, and may further complete some or all functions of a physical layer. For detailed descriptions of the foregoing protocol layers, refer to technical specifications related to the 3rd generation partnership project (3rd generation partnership project, 3GPP).

In some deployments, a plurality of RAN nodes coordinate to assist the terminal in implementing radio access, and different RAN nodes each implement a part of functions of the base station. For example, the RAN node may be a CU, a DU, a CU-CP, a CU-UP, a radio unit (radio unit, RU), or the like. The CU and the DU may be separately disposed, or may be included in a same network element, for example, a BBU. The RU may be included in a radio frequency device or a radio frequency unit, for example, included in an RRU, an AAU, or an RRH.

In different systems, the CU (or the CU-CP and the CU-UP), the DU, or the RU may alternatively have different names, but a person skilled in the art may understand meanings of the names. For example, the radio access network may alternatively be an open radio access network (open radio access network, O-RAN) architecture. In an ORAN system, a CU may also be referred to as an open CU (open CU, O-CU), a DU may also be referred to as an open DU (open DU, O-DU), a CU-CP may also be referred to as an open (open CU-CP, O-CU-CP), a CU-UP may also be referred to as an open (open CU-UP, O-CU-UP), and an RU may also be referred to as an open RU (open RU, O-RU). Any of the CU (or the CU-CP or the CU-UP), the DU, and the RU in this application may be implemented by a software module, a hardware module, or a combination of a software module and a hardware module.

In embodiments of this application, an apparatus configured to implement a function of the network device may be the network device, or may be an apparatus that can support the network device in implementing the function, for example, a chip system or a chip. The apparatus may be installed in the network device. In this embodiment of this application, the chip system may include a chip, or may include a chip and another discrete component. In embodiments of this application, an example in which the apparatus for implementing the function of the network device is the network device is merely used for description, and constitutes no limitation on the solutions in embodiments of this application.

The network device and the terminal device may be deployed on land, including an indoor or outdoor device, a handheld device, or a vehicle-mounted device; may be deployed on a water surface; or may be deployed on an airplane, a balloon, and a satellite in air. A scenario in which the network device and the terminal device are located is not limited in embodiments of this application. In addition, the terminal device and the network device may be hardware devices; or may be software functions running on dedicated hardware or software functions running on general-purpose hardware, for example, virtualized functions instantiated on a platform (for example, a cloud platform); or may be entities including a dedicated or general-purpose hardware device and a software function. Specific forms of the terminal device and the network device are not limited in this application.

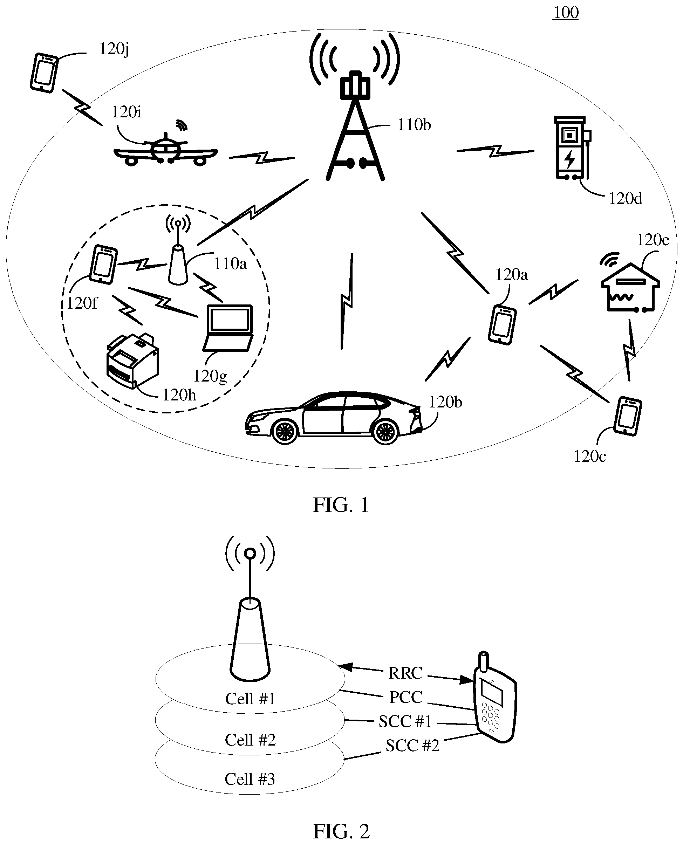

FIG. 1 is a diagram of a wireless communication system to which an embodiment of this application is applicable. As shown in FIG. 1, the wireless communication system includes a radio access network 100. The radio access network 100 may be a next generation (for example, 6G or a higher version) radio access network, or a conventional (for example, 5G, 4G, 3G, or 2G) radio access network. One or more terminal devices (120a to 120j, which are collectively referred to as 12) may be interconnected or connected to one or more network devices (110a and 110b, which are collectively referred to as 110) in the radio access network 100. Network elements in the wireless communication system are connected to each other through an interface (for example, NG or Xn) or an air interface.

It may be understood that FIG. 1 is merely a diagram. The wireless communication system may further include another device, for example, may further include a core network device, a wireless relay device, and/or a wireless backhaul device, which are/is not shown in FIG. 1.

In this application, the base station sends a downlink signal or downlink information to the terminal, where the downlink information is carried on a downlink channel; and the terminal sends an uplink signal or uplink information to the base station, where the uplink information is carried on an uplink channel. To communicate with the base station, the terminal needs to establish a wireless connection to a cell controlled by the base station. The cell that establishes the wireless connection to the terminal is referred to as a serving cell of the terminal. When communicating with the serving cell, the terminal is further interfered by a signal from a neighboring cell.

In this specification, a physical uplink control channel (physical uplink control channel, PUCCH) and a physical uplink shared channel (physical uplink shared channel, PUSCH) are merely examples of an uplink control channel and an uplink data channel respectively. In different systems and different scenarios, the data channel and the control channel may have different names. This is not limited in embodiments of this application.

For ease of better understanding the technical solutions of this application, some related technologies in the technical solutions of this application are described.
1. A cell is a set of resources managed by a base station, including a frequency domain resource and a space domain resource. The frequency domain resource of the cell includes an uplink frequency domain resource and/or a downlink frequency domain resource. The space domain resource of the cell may be a space domain resource corresponding to one beam or a group of beams, which may alternatively be understood as that one cell corresponds to one specific physical coverage area. When different cells are managed by different base stations, for example, a cell #1 and a cell #2 are managed by different base stations, it may be referred to that the cell #1 and the cell #2 are not co-sited. When different cells are managed by a same base station, for example, when a cell #1 and a cell #2 are managed by a same base station, it may be referred to that the cell #1 and the cell #2 are co-sited.

It should be noted that, cells and carriers are in one-to-one correspondence, and cells and carriers may be used interchangeably. In other words, a frequency band range in which the cell is located may be understood as a frequency band range in which a frequency of a carrier corresponding to the cell, or may be referred to as an operating frequency band of the cell, a frequency band in which the cell is located, or the like.

2. CA is to aggregate two or more component carriers (component carriers, CCs) together to support a higher transmission bandwidth. A CA technology in NR is used to increase a transmission bandwidth of a single user. Specifically, the CA technology may implement multifrequency resource integration. For example, spectrum resources of a same frequency band or different frequency bands may be aggregated by using the CA technology to provide for a terminal to use, thereby improving resource utilization of an entire network and improving user experience.

For ease of understanding, the CA technology is briefly described with reference to FIG. 2. As shown in FIG. 2, a primary component carrier (primary component carrier, PCC) corresponding to a cell #1, a secondary component carrier (secondary component carrier, SCC) corresponding to a cell #2 (that is, an SCC #1 shown in FIG. 2), and an SCC (that is, an SCC #2 shown in FIG. 2) corresponding to a cell #3 are aggregated together to provide a service for a terminal. The cell #1 is referred to as a primary cell (primary cell, PCell), and both the cell #2 and the cell #3 are secondary cells (secondary cells, SCells). The PCell is a cell in which the terminal performs initial connection establishment or a cell in which the terminal performs RRC connection reestablishment. The PCell is responsible for RRC communication with the terminal. The PCell corresponds to the PCC. Carriers of the PCell may be classified into a downlink (downlink, DL) carrier DL PCC and an uplink (uplink, UL) carrier UL PCC. The SCell is added during RRC reconfiguration, and is configured to provide an additional radio resource. There is no RRC communication between the SCell and the UE. Similarly, carriers of the SCell may be classified into a DL SCC and a UL SCC.

In R15, NR defines two states for the secondary cell: an active state and an inactive state. When the secondary cell is in the active state, and a physical downlink control channel (physical downlink control channel, PDCCH) is configured for the secondary cell, the UE can monitor a PDCCH of the secondary cell, and perform signal transmission with the network device based on configuration information delivered by the network device and uplink and downlink scheduling information. When the secondary cell is in the inactive state, the UE does not need to perform any uplink and downlink signal monitoring and transmission in the secondary cell. The UE may switch between the active state and the inactive state of the secondary cell by using activation/deactivation signaling sent by the network device. Alternatively, the network device may configure a deactivation timer for the terminal device. After the timer expires, the UE considers that a state of the secondary cell changes from the active state to the inactive state.

Currently, in some scenarios in which the network device and the terminal device have a low data transmission requirement (where for example, data transmission between the network device and the terminal device is usually small in some specific time periods), after the secondary cell is added and configured, a secondary cell in an inactive state is not activated. In this case, if the network device keeps sending an SSB signal on the secondary cell through broadcast, power consumption of the network device is high, and a resource waste is caused.

In view of this, this application provides a communication method, so that when the network device and the terminal device do not need to perform service data transmission on the secondary cell, power consumption of the network device can be reduced, and resources can be reduced.

The following describes in detail the method provided in embodiments of this application with reference to the accompanying drawings. Embodiments provided in this application may be applied to the communication system shown in FIG. 1. This is not limited.

In the following embodiments, the terminal device and the network device are used as examples for description. The terminal device may be replaced with a component (for example, a chip or a circuit) of the terminal device, and the network device may be replaced with a component (for example, a chip or a circuit) of the network device.

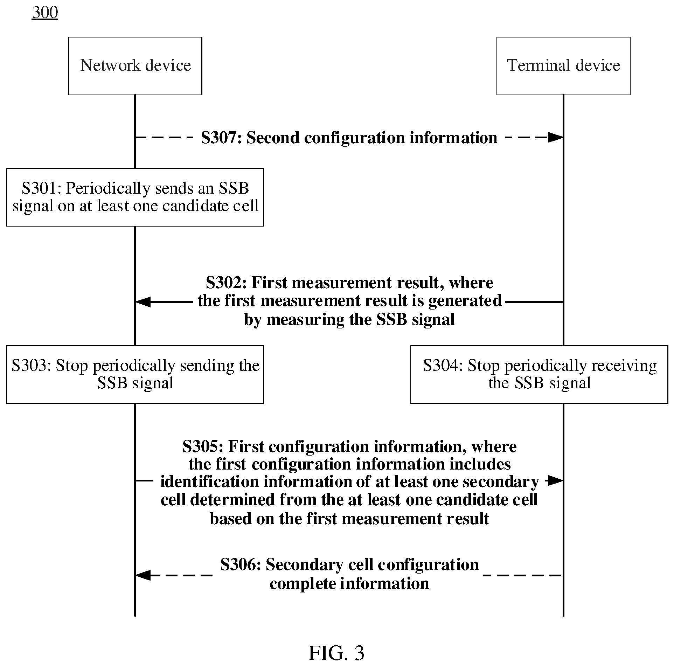

FIG. 3 is a diagram of a first communication method 300 according to an embodiment of this application. FIG. 3 shows a schematic procedure of information exchange between a network device and a terminal device. The method 300 shown in FIG. 3 may include the following plurality of steps.

S301: The network device periodically sends an SSB signal on at least one candidate cell.

Specifically, after the network device establishes an RRC connection to the terminal device via a primary cell, if the network device configures and adds a secondary cell for the terminal device, the network device establishes, through manual configuration, a CA frequency set and at least one frequency included in the CA frequency set. A cell corresponding to the at least one frequency (where the frequency may be, for example, a center frequency of a frequency resource) is the at least one candidate cell. Then, the network device periodically sends the SSB signal through broadcast on the at least one candidate cell. Correspondingly, the terminal device periodically receives the SSB signal on the at least one candidate cell. For example, if candidate cells configured by the network device include a candidate cell #1, a candidate cell #2, and a candidate cell #3, the network device periodically sends SSB signals on the candidate cell #1, the candidate cell #2, and the candidate cell #3 simultaneously. Correspondingly, the terminal device periodically receives the SSB signals on the candidate cell #1, the candidate cell #2, and the candidate cell #3.

S302: The terminal device sends a first measurement result to the network device, where the first measurement result is generated by measuring the SSB signal.

Specifically, when the terminal device measures the SSB signal on at least one secondary cell based on configuration information (for example, obtained in a preset manner in the following or configured by the network device) of the SSB signal, the terminal device generates a measurement result for each candidate cell, and reports the measurement result (namely, the first measurement result) for each candidate cell to the network device. For example, if the candidate cells configured by the network device include the candidate cell #1, the candidate cell #2, and the candidate cell #3, the terminal device generates a measurement result for the candidate cell #1, a measurement result for the candidate cell #2, and a measurement result for the candidate cell #3 by measuring the SSB signals on the candidate cell #1, the candidate cell #2, and the candidate cell #3.

It should be noted that the first measurement result may be a layer 3 (L3) measurement result or a layer 1 (L1) measurement result, or may be reference signal received power (reference signal received power, RSRP) information. This is not limited in this application. For an L3/L1 measurement process, refer to descriptions in a related protocol. Details are not described herein. In addition, that the terminal device sends the first measurement result to the network device may be that the terminal device periodically reports the first measurement result to the network device. This is not limited in this application.

S303: The network device stops periodically sending the SSB signal.

Specifically, after the network device receives the first measurement result from the terminal device, the network device no longer continues to send the SSB signal on the at least one candidate cell.

S304: The terminal device stops periodically receiving the SSB signal.

Specifically, after the terminal device reports the first measurement result to the network device, the terminal device may simultaneously stop receiving the SSB signal on the at least one candidate cell.

S305: The network device sends first configuration information to the terminal device, where the first configuration information includes identification information of at least one cell, the first configuration information indicates to configure, as a secondary cell, at least one cell corresponding to the identification information of the at least one cell, and the at least one cell is determined from the at least one candidate cell based on the first measurement result.

Specifically, after the network device receives the first measurement result from the terminal device, the network device may select, based on a measurement result corresponding to each candidate cell, at least one cell from the at least one candidate cell as a secondary cell configured for and added to the terminal device, include at least one piece of identification information corresponding to the determined secondary cell in the first configuration information, and indicate, by using the first configuration information, the terminal device to add a cell corresponding to the at least one piece of identification information as the secondary cell. Correspondingly, after receiving the first configuration information, the terminal device determines (for example, in a table lookup manner), based on the at least one piece of identification information in the first configuration information, a cell corresponding to each piece of identification information, and adds and configures the cell corresponding to each piece of identification information as a secondary cell.

It should be noted that identification information corresponding to the secondary cell is not limited in this application. Optionally, the identification information is a cell ID or a cell index (index). In addition, a message in which the first configuration information is carried is not limited in this application. Optionally, the first configuration information is carried in an RRC reconfiguration (RRC Reconfiguration) message.

For example, if the network device receives a measurement result RSRP #1 for the candidate cell #1, a measurement result RSRP #2 for the candidate cell #2, and a measurement result RSRP #3 for the candidate cell #3, the network device may use, as a secondary cell configured for the terminal device, at least one candidate cell corresponding to RSRP that exceeds a system preset threshold. For example, when the RSRP #1 and the RSRP #3 respectively corresponding to the candidate cell #1 and the candidate cell #3 are greater than or equal to the threshold, the network device may send an ID #1 and an ID #3 (or an index #1 and an index #3) corresponding to the candidate cell #1 and the candidate cell #3 to the terminal device by using an RRC reconfiguration message. After receiving the RRC reconfiguration message, the terminal device obtains the ID #1 and the ID #3 corresponding to the candidate cell #1 and the candidate cell #3, and configures the candidate cell #1 and the candidate cell #3 as a secondary cell #1 and a secondary cell #2 of the terminal device respectively.

It should be noted that a sequence of S303 and S305 is not limited in this application. In other words, the network device may first perform S303, and then perform S305; first perform S305, and then perform S303; or simultaneously perform S303 and S305.

Optionally, after the terminal device adds the secondary cell based on the first configuration information, the terminal device reports configuration complete information to a network. In this case, the method 300 further includes the following S306.

S306: The terminal device sends secondary cell configuration complete information to the network device.

Optionally, the secondary cell configuration complete information is carried in an RRC reconfiguration complete (RRC Reconfiguration Complete) message, or the secondary cell configuration complete information is carried in another message. This is not limited in this application.

It should be noted that after the terminal device detects the SSB signal on the at least one candidate cell, the terminal device needs to measure the SSB signal based on second configuration information, to obtain the first measurement result. In some embodiments, the second configuration information may include a sending periodicity of the SSB signal, SSB-based measurement timing configuration (SSB-based measurement timing configuration, SMTC) information, and frequency information of the at least one candidate cell. The SMTC information may include an SMTC periodicity and an SMTC duration. The SMTC periodicity is a measurement periodicity of the SSB signal, and the SMTC duration is a measurement duration of the SSB signal. It should be noted that, to ensure that all SSB signals sent on the candidate cells are accurately and completely measured, the SMTC periodicity is at least equal to the sending periodicity of the SSB signal, that is, the SMTC periodicity may be the same as the sending periodicity of the SSB signal, or may be greater than the sending periodicity of the SSB signal. Each candidate cell further has unique corresponding identification information. Therefore, in some other embodiments, the second configuration information includes a sending periodicity of the SSB signal, SMTC information, and identification information corresponding to the at least one candidate cell. Alternatively, in some other embodiments, the second configuration information includes a sending periodicity of the SSB signal, SMTC information, frequency information of the at least one candidate cell, and identification information corresponding to the at least one candidate cell.

In a possible implementation, the terminal device may measure, by default, the SSB on the at least one candidate cell by using the second configuration information preset in the terminal device. In this case, after the terminal device detects the SSB signal on the at least one candidate cell, the terminal device measures the SSB signal based on the preset second configuration information.

In another possible implementation, the terminal device may receive the second configuration information from the network device. In this case, the method 300 further includes S307.

S307: The network device sends the second configuration information to the terminal device, where the second configuration information is configuration information of the SSB signal periodically sent on the at least one candidate cell.

Specifically, a message in which the second configuration information is carried is not limited in this application. Optionally, the second configuration information is carried in an RRC reconfiguration (RRC Reconfiguration) message. In this case, the terminal device may measure, by using the second configuration information obtained from the RRC reconfiguration message, the SSB signal periodically sent on the at least one candidate cell, to obtain the first measurement result.

It should be noted that when the method 300 further includes S307, a sequence of S301 and S307 is not limited in this application. To be specific, the network device may first send the SSB signal, and then send the second configuration information; send the SSB signal after sending the second configuration information; or simultaneously send the second configuration information and the SSB signal.

Based on the foregoing solution, the network device stops sending the SSB after the secondary cell is added. This helps reduce energy consumption of the network device and save network resources.

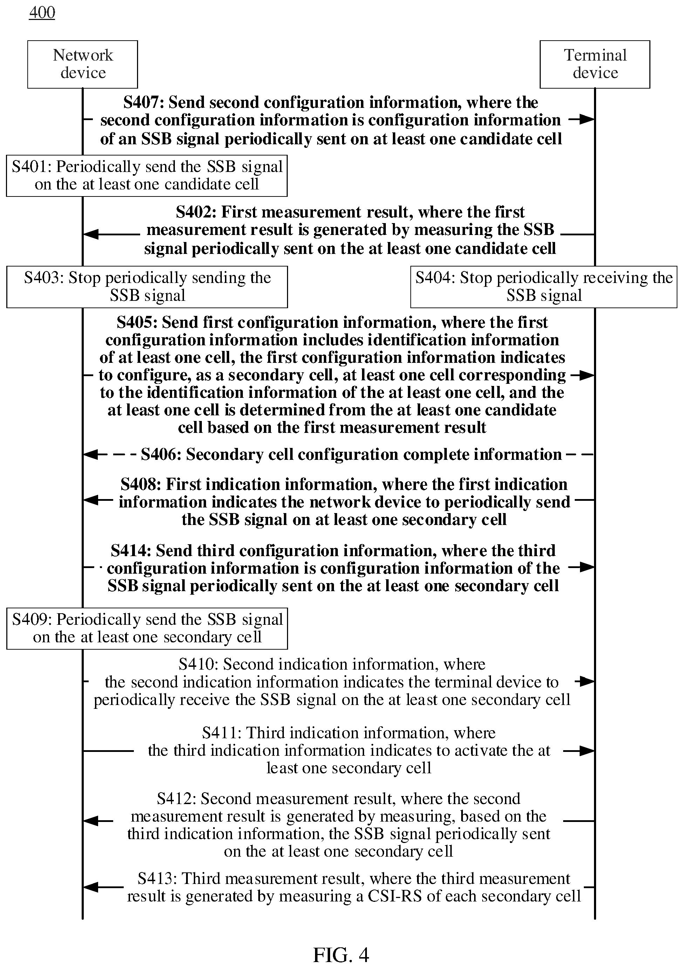

FIG. 4 is a diagram of a second communication method 400 according to an embodiment of this application. FIG. 4 shows a schematic procedure of information exchange between a network device and a terminal device. It may be understood that FIG. 3 shows the configuration procedure of the secondary cell. Compared with the method 300 shown in FIG. 3, the method 400 shown in FIG. 4 not only includes the configuration procedure of the secondary cell, but also includes an activation procedure of the secondary cell. Specifically, the method 400 shown in FIG. 4 may include the following plurality of steps. For S401 to S407, refer to the descriptions of S301 to S307 in FIG. 3. Details are not described herein again.

It may be understood that, after a step of adding and configuring a secondary cell is completed, the secondary cell is in an inactive state by default. In this case, the network device does not send an SSB signal on at least one configured secondary cell, and does not perform data transmission with the terminal device on the secondary cell. Correspondingly, the terminal device does not monitor the SSB signal on the deactivated secondary cell. When the at least one configured secondary cell needs to be activated, the network device and the terminal device perform the following plurality of steps.

It should be noted that, in FIG. 4, triggering of an activation procedure of at least one secondary cell is initiated by the terminal device. For example, when the terminal device has an uplink service data transmission requirement, the terminal device may trigger the activation procedure of the at least one secondary cell. After the at least one secondary cell is activated, the terminal device may implement an uplink data transmission requirement.

S408: The terminal device sends first indication information to the network device, where the first indication information indicates the network device to periodically send an SSB signal on the at least one secondary cell.

Specifically, when the terminal device triggers the activation procedure of the at least one secondary cell, the terminal device sends the first indication information to the network device, and correspondingly, the network device receives the first indication information.

It should be noted that the first indication information is not limited in this application, and may be a signal. The signal may be a signal carried on a physical uplink channel, for example, an uplink wake-up signal (wake-up signal, WUS), or may be a signal not carried on the physical uplink channel, for example, a sounding reference signal (sounding reference signal, SRS). In addition, the first indication information may be information carried on the physical uplink channel, for example, carried in an indication field of uplink control information (uplink control information, UCI) on a PUCCH or a PUSCH. In this case, the UCI sent by the terminal device to the network device includes the indication field that carries the first indication information, and the indication field may include one or more bits. For example, if the indication field occupies 2 bits, 00 indicates that the indication field does not carry the first indication information, or the first indication information does not indicate the network device to send the SSB signal; and 11 indicates that the first indication information carried in the indication field indicates the network device to send the SSB signal.

S409: The network device periodically sends the SSB signal on the at least one secondary cell based on the first indication information.

Specifically, after the network device receives the first indication information, the network device learns that the terminal device needs to activate the secondary cell. In this case, the network device restarts to periodically send the SSB signal on the at least one secondary cell.

S410: The network device sends second indication information to the terminal device, where the second indication information indicates the terminal device to periodically receive the SSB signal on the at least one secondary cell.

Specifically, after the network device receives the first indication information, the network device sends the second indication information to the terminal device, where the second indication information includes identification information corresponding to the at least one secondary cell on which the network device sends the SSB signal. Optionally, the second indication information is carried in medium access control control element (medium access control control element, MAC CE) signaling, downlink control information (downlink control information, DCI), or the like. This is not limited in this application.

S411: The network device sends third indication information to the terminal device, where the third indication information indicates to activate the at least one secondary cell.

A message in which the third indication information is carried is not limited in this application. Optionally, the third indication information is carried in MAC CE signaling. The third indication information includes the identification information corresponding to the at least one secondary cell on which the network device sends the SSB signal.

It should be noted that in the solution of this application, a sequence of S409 and S410 is not limited. The network device may first send the SSB signal to the terminal device, and then send the second indication information indicating the at least one secondary cell; the network device may first send the second indication information, and then starts to periodically send the SSB signal; or the network device may periodically send the SSB signal on the at least one secondary cell when sending the second indication information.

It may be understood that the identification information of the at least one secondary cell included in the second indication information and that included in the third indication information are consistent, and both indicate one or more secondary cells on which the network device sends the SSB signal, namely, one or more secondary cells that need to be activated.

S412: The terminal device sends a second measurement result to the network device, where the second measurement result is generated by measuring, based on the third indication information, the SSB signal periodically sent on the at least one secondary cell.

In a possible implementation, when the network device first sends the SSB signal to the terminal device, and then sends the third indication information, optionally, the terminal device may periodically measure the SSB signal on a corresponding secondary cell in advance based on the second indication information. Specifically, after the terminal device detects the SSB signal on the at least one secondary cell, the terminal device periodically measures the SSB signal. In this case, the terminal device obtains the second measurement result. The second measurement result is a measurement result obtained through measurement of the SSB signal on the at least one secondary cell. The second measurement result and the first measurement result are same, for example, each are mainly RSRP information for each secondary cell. After the terminal device receives the third indication information, the terminal device performs time-frequency synchronization with the network device, and measures a channel state information-reference signal (channel state information-reference signal, CSI-RS) of each secondary cell, to obtain channel state information (channel state information, CSI), namely, a third measurement result, for each secondary cell, so that the network device can perform corresponding data scheduling based on the third measurement result. Generally, the CSI mainly includes three items: channel quality indicator (channel quality indicator, CQI) information, rank indicator (rank indicator, RI) information, and precoding indicator (precoding matrix indicator, PMI) information. This is not limited in this application. Optionally, in some scenarios, for example, when there are abundant uplink resources, the terminal device may report the second measurement result in advance. To be specific, before the terminal device receives the third indication information, the terminal device periodically reports the obtained second measurement result to the network device, and after receiving the third indication information and measuring the CSI-RS, reports the third measurement result to the network device, to complete the activation procedure of the secondary cell. In this case, S412 is performed before S411, and S413 is performed after S411. Alternatively, in some other scenarios, for example, in a scenario in which uplink resources are limited, even if the terminal device measures the SSB signal in advance, the terminal device does not report the second measurement result. Instead, after receiving the third indication information, the terminal device first reports the second measurement result, then performs synchronization and CSI-RS measurement, and finally reports the CSI, to activate the secondary cell. In this case, S412 and S413 are performed after S411.

In another possible implementation, when the network device first sends the third indication information and then starts to periodically send the SSB signal, after detecting, based on secondary cell identification information carried in the second indication information and/or the third indication information, an SSB signal on a secondary cell corresponding to the identification information, the terminal device first periodically measures the SSB signal to obtain RSRP information, periodically reports the RSRP information to the network device, sequentially performs time-frequency synchronization with the network device and CSI-RS measurement, and finally reports CSI, to activate the secondary cell. In this case, in the method 400, S412 and S413 are performed after S411.

It should be noted that configuration information used by the terminal device to measure the SSB signal sent on the secondary cell may continue to be the configuration information of the SSB signal on the candidate cell, for example, the configuration information preset in the terminal device or the second configuration information received from the network device in S407. In other words, in this scenario, the terminal device may obtain the configuration information only once to measure the SSB signals on the candidate cell and the secondary cell.

Alternatively, the terminal device may receive third configuration information from the network device, where the third configuration information is measurement configuration information of the SSB signal sent on the at least one secondary cell.

Optionally, the third configuration information and the first configuration information are carried in a same message, for example, in an RRC reconfiguration message. In this case, the terminal device may obtain both the first configuration information and the third configuration information in S405, and after detecting the SSB sent on the secondary cell, measure the SSB signal by using the third configuration information obtained in advance, to obtain the second measurement result.

Optionally, the third configuration information is carried in another message, for example, carried in another RRC reconfiguration message. In this case, the method 400 further includes S414.

S414: The network device sends the third configuration information to the terminal device, where the third configuration information is the configuration information of the SSB signal periodically sent on the at least one secondary cell.

Specifically, the network device separately sends the third configuration information to the terminal device. After detecting the SSB sent on the secondary cell, the terminal device measures the SSB signal by using the third configuration information, to obtain the second measurement result. It may be understood that a sequence of S414 and S409 is not limited in this application.

Based on the foregoing solution, when the secondary cell needs to be activated, the network device may restart sending of the SSB through an indication of the terminal device, so that an SSB signal of a system is sent on demand. This ensures that energy consumption of the network device is reduced, and improves system flexibility.

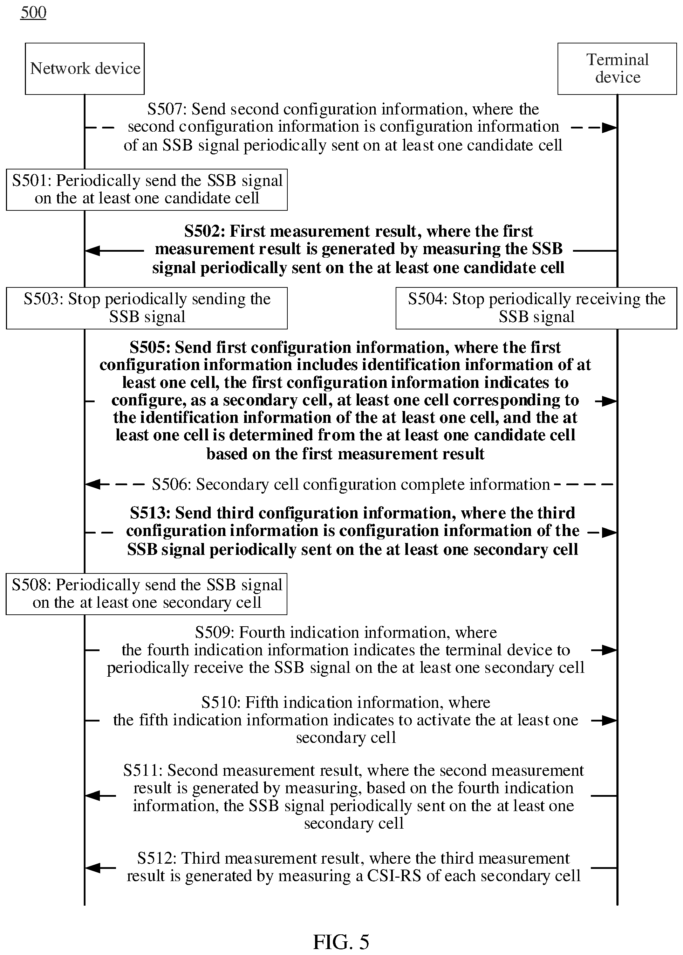

FIG. 5 is a diagram of a third communication method 500 according to an embodiment of this application. FIG. 5 shows a schematic procedure of information exchange between a network device and a terminal device. It should be noted that, in comparison with the solution shown in FIG. 4, in the method 500 shown in FIG. 5, triggering of the activation procedure of the at least one secondary cell is initiated by the network device. For example, when the network device determines, based on a traffic volume, that at least one secondary cell of the terminal device needs to be activated, the network device may trigger an activation procedure of the at least one secondary cell, and after the at least one secondary cell is activated, a data transmission requirement is implemented. Specifically, the method 500 shown in FIG. 5 may include the following plurality of steps. S501 to S507 are a process of configuring a secondary cell. For details, refer to the descriptions of S301 to S307 in FIG. 3. Details are not described herein again.

S508: The network device periodically sends an SSB signal on at least one secondary cell.

Specifically, when the network device needs to activate a secondary cell, the network device restarts to periodically send the SSB signal on the at least one secondary cell.

S509: The network device sends fourth indication information to the terminal device, where the fourth indication information indicates the terminal device to periodically receive the SSB signal on the at least one secondary cell.

Specifically, the fourth indication information includes identification information corresponding to the at least one secondary cell and/or a frequency corresponding to the at least one secondary cell. After the terminal device receives the fourth indication information, the terminal device determines the at least one secondary cell based on the identification information and/or the frequency corresponding to the at least one secondary cell that are/is in the fourth indication information, and starts to periodically receive the SSB signal on the at least one determined secondary cell.

It should be noted that a message in which the fourth indication information is carried is not limited in this application. For example, the fourth indication information may be carried in a MAC CE or DCI. It may be understood that when the fourth indication information is carried in the MAC CE or the DCI, the MAC CE or the DCI sent by the network device to the terminal device includes an indication field that carries third indication information, and the indication field may include one or more bits.

It may be understood that a sequence of S508 and S509 is not limited in this application. To be specific, the network device may first send the SSB signal, and then send the fourth indication information to the terminal device, the network device may send the SSB signal after sending the fourth indication information, or the network device may simultaneously send the SSB signal and the fourth indication information.

S510: The network device sends fifth indication information to the terminal device, where the fifth indication information indicates to activate the at least one secondary cell, and the fifth indication information includes identification information corresponding to the at least one secondary cell on which the network device sends the SSB signal. It may be understood that the fifth indication information has a same function as the third indication information in S411 in FIG. 4. Therefore, for this step, refer to S411 in FIG. 4. Details are not described herein again.

It should be noted that in this solution, a sequence of S508 and S509 is not limited. The network device may first send the SSB signal to the terminal device, and then send the fourth indication information indicating the at least one secondary cell; the network device may first send the fourth indication information, and then starts to periodically send the SSB signal; or the network device sends the SSB signal on the indicated secondary cell when indicating the secondary cell.

It may be understood that the identification information of the at least one secondary cell included in the fourth indication information is consistent with that included in the fifth indication information.

S511: The terminal device sends a second measurement result to the network device, where the second measurement result is generated by measuring, based on the fourth indication information, the SSB signal periodically sent on the at least one secondary cell.

When the network device first sends the SSB signal to the terminal device, and then sends the fifth indication information, optionally, the terminal device may periodically measure the SSB signal in advance. Specifically, after the terminal device detects the SSB signal on the at least one secondary cell based on the fourth indication information, the terminal device periodically measures the SSB signal. In this case, the terminal device obtains the second measurement result. The second measurement result is a measurement result obtained through measurement of the SSB signal on the at least one secondary cell. The second measurement result and a first measurement result are same, for example, each are mainly RSRP information for each secondary cell. After the terminal device receives the fifth indication information, the terminal device performs time-frequency synchronization with the network device, and measures a CSI-RS of each secondary cell, to obtain CSI, namely, a third measurement result, for each secondary cell, so that the network device can perform corresponding data scheduling based on the third measurement result. The CSI may include CQI information, RI information, PMI information, and the like. Optionally, in some scenarios, for example, when there are abundant uplink resources, the terminal device may report the second measurement result in advance. To be specific, before the terminal device receives the fifth indication information, the terminal device periodically reports the obtained second measurement result to the network device, and after receiving the fifth indication information and measuring the CSI-RS, reports the third measurement result to the network device, to complete the activation procedure of the secondary cell. In this case, in the method 500, S511 is performed before S510, and S512 is performed after S510. Alternatively, in some other scenarios, for example, in a scenario in which uplink resources are limited, even if the terminal device measures the SSB signal in advance, the terminal device does not report the second measurement result. Instead, after receiving the fifth indication information, the terminal device first reports the second measurement result, then performs synchronization and CSI-RS measurement, and finally reports the CSI, to activate the secondary cell. In this case, in the method 500, S511 and S512 are both performed after S510.

When the network device first sends the fifth indication information and then starts to periodically send the SSB signal, after detecting an SSB signal on an indicated secondary cell based on secondary cell identification information carried in the fourth indication information and/or the fifth indication information, the terminal device first periodically measures the SSB signal, periodically reports RSRP information, sequentially performs time-frequency synchronization with the network device and CSI-RS measurement, and finally reports CSI, to activate the secondary cell. In this case, in the method 500, S511 and S512 are both performed after S510.

Similarly, configuration information used by the terminal device to measure the SSB signal sent on the secondary cell may continue to be the configuration information of the SSB signal on the candidate cell, the second configuration information received from the network device in S507, or the third configuration information received from the network device. It may be understood that when the third configuration information is carried in another message, the method 500 further includes S513. Specifically, for this part, refer to the related descriptions in FIG. 4. Details are not described herein again.

Based on the foregoing solution, when the secondary cell needs to be activated, the network device may actively start sending of the SSB, so that an SSB signal of a system is sent on demand. This ensures that energy consumption of the network device is reduced, and improves system flexibility.

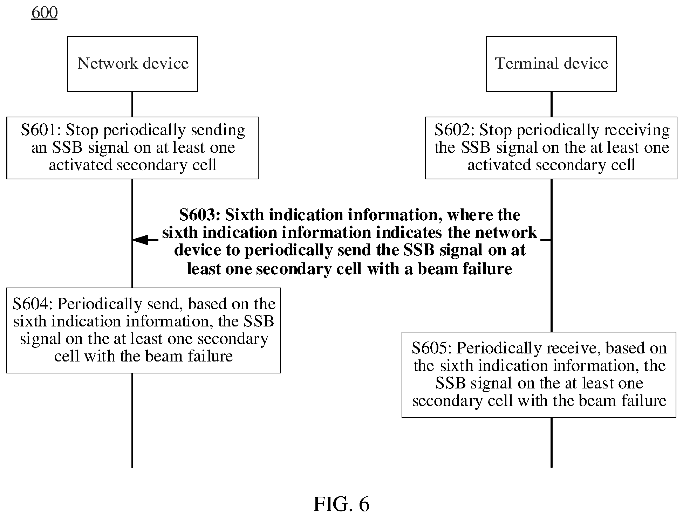

FIG. 6 is a diagram of a fourth communication method 600 according to an embodiment of this application. FIG. 6 shows a schematic procedure of information exchange between a network device and a terminal device. It should be noted that the method 600 shown in FIG. 6 is another procedure after a secondary cell is activated. Specifically, the method 600 shown in FIG. 6 may be used in combination with the method 400 shown in FIG. 4 and the method 500 shown in FIG. 5. The method 600 includes the following plurality of steps.

S601: The network device stops periodically sending an SSB signal on at least one activated secondary cell.

Specifically, after the network device receives a third measurement result reported by the terminal device, it indicates that an activation procedure has been completed for a secondary cell. In this case, the secondary cell is in an active state, and the network device and the terminal device may perform data transmission on the secondary cell. For the activated secondary cell, the network device stops periodically sending the SSB signal on the at least one activated secondary cell.

S602: The terminal device stops periodically receiving the SSB signal on the at least one activated secondary cell.

Specifically, after the terminal device reports the third measurement result, the terminal device stops periodically receiving the SSB signal on the at least one activated secondary cell.

S603: The terminal device sends sixth indication information to the network device, where the sixth indication information indicates the network device to periodically send the SSB signal on at least one secondary cell with a beam failure.

Specifically, in a data transmission process, an original beam may fail due to movement, rotation, an environment change, and other factors of the terminal device, resulting in a beam failure. In this case, the terminal device sends the sixth indication information to the network device. The sixth indication information includes identification information of the at least one secondary cell with the beam failure, to indicate the network device to periodically resend the SSB signal on the at least one secondary cell with the beam failure for beam recovery. Correspondingly, the network device receives the sixth indication information.

In this solution, the sixth indication information may be a signal, for example, a WUS or an SRS, or the sixth indication information may be carried in an indication field of UCI. This is not limited in this application. When the sixth indication information is carried in the indication field of the UCI, the UCI sent by the terminal device to the network device includes the indication field that carries the sixth indication information, and the indication field may include one or more bits.

S604: The network device periodically sends, based on the sixth indication information, the SSB signal on the at least one secondary cell with the beam failure.

Specifically, after receiving the sixth indication information, the network device determines, based on the identification information in the sixth indication information, the at least one secondary cell with the beam failure, and resends the SSB signal on the at least one determined secondary cell with the beam failure.

S605: The terminal device periodically receives, based on the sixth indication information, the SSB signal on the at least one secondary cell with the beam failure.

Specifically, after sending the sixth indication information, the terminal device starts to monitor the SSB signal on the at least one secondary cell with the beam failure.

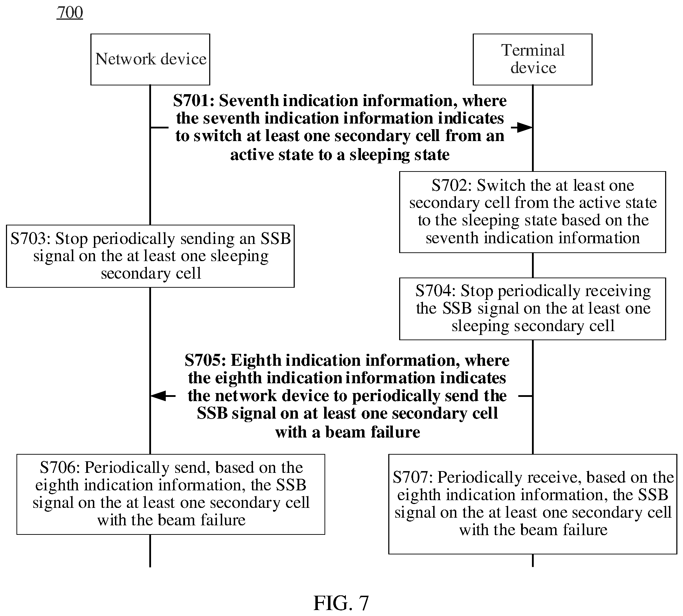

FIG. 7 is a diagram of a fifth communication method 700 according to an embodiment of this application. FIG. 7 shows a schematic procedure of information exchange between a network device and a terminal device. It should be noted that the method 700 shown in FIG. 7 is another procedure after a secondary cell is activated. Specifically, the method 700 shown in FIG. 7 may be used in combination with the method 400 shown in FIG. 4 and the method 500 shown in FIG. 5. The method 700 includes the following plurality of steps.

S701: The network device sends seventh indication information to the terminal device, where the seventh indication information indicates to switch at least one secondary cell from an active state to a sleeping state.

Specifically, after data transmission between the network device and the terminal device ends, or when there is no data transmission between the network device and the terminal device, the network device sends the seventh indication information to the terminal device. The seventh indication information may be carried in DCI. This is not limited in this solution.

S702: The terminal device switches the at least one secondary cell from the active state to the sleeping state based on the seventh indication information.

Specifically, the seventh indication information includes identification information of the at least one secondary cell that is switched to the sleeping state. Optionally, the seventh indication information is carried in an indication field of the DCI, the indication field that carries the seventh indication information may include one or more bits, and a value of the one or more bits corresponds to identification information of a sleeping secondary cell.

S703: The network device stops periodically sending the SSB signal on the at least one sleeping secondary cell.

Specifically, when the secondary cell is in the sleeping state, data transmission is not performed between the network device and the terminal device. Therefore, when the network device sends the seventh indication information to switch the secondary cell from the active state to the sleeping state, the network device stops sending the SSB signal on the sleeping secondary cell.

S704: The terminal device stops periodically receiving the SSB signal on the at least one sleeping secondary cell.

Specifically, after the terminal device receives the seventh indication information, the terminal device determines the sleeping secondary cell based on the seventh indication information, and stops periodically receiving the SSB signal on the at least one determined sleeping secondary cell.

S705: The terminal device sends eighth indication information to the network device, where the eighth indication information indicates the network device to periodically send the SSB signal on at least one secondary cell with a beam failure.

Specifically, in a data transmission process, an original beam may fail due to movement, rotation, an environment change, and other factors of the terminal device, resulting in a beam failure. In this case, the terminal device sends the eighth indication information to the network device. The eighth indication information includes identification information of the at least one secondary cell with the beam failure, to indicate the network device to periodically resend, for beam recovery, the SSB signal on the at least one secondary cell with the beam failure corresponding to the identification information of the secondary cell. Correspondingly, the network device receives the eighth indication information.

In this solution, the eighth indication information may be a signal, for example, a WUS or an SRS, or the eighth indication information may be carried in an indication field of UCI. This is not limited in this application. When the eighth indication information is carried in the indication field of the UCI, the UCI sent by the terminal device to the network device includes the indication field that carries the eighth indication information, and the indication field may include one or more bits.

S706: The network device periodically sends, based on the eighth indication information, the SSB signal on the at least one secondary cell with the beam failure.

Specifically, after receiving the eighth indication information, the network device determines, based on the identification information in the eighth indication information, the at least one secondary cell with the beam failure, and resends the SSB signal on the at least one determined secondary cell with the beam failure.

S707: The terminal device periodically receives, based on the eighth indication information, the SSB signal on the at least one secondary cell with the beam failure.

Specifically, after sending the eighth indication information, the terminal device starts to monitor the SSB signal on the at least one secondary cell with the beam failure.

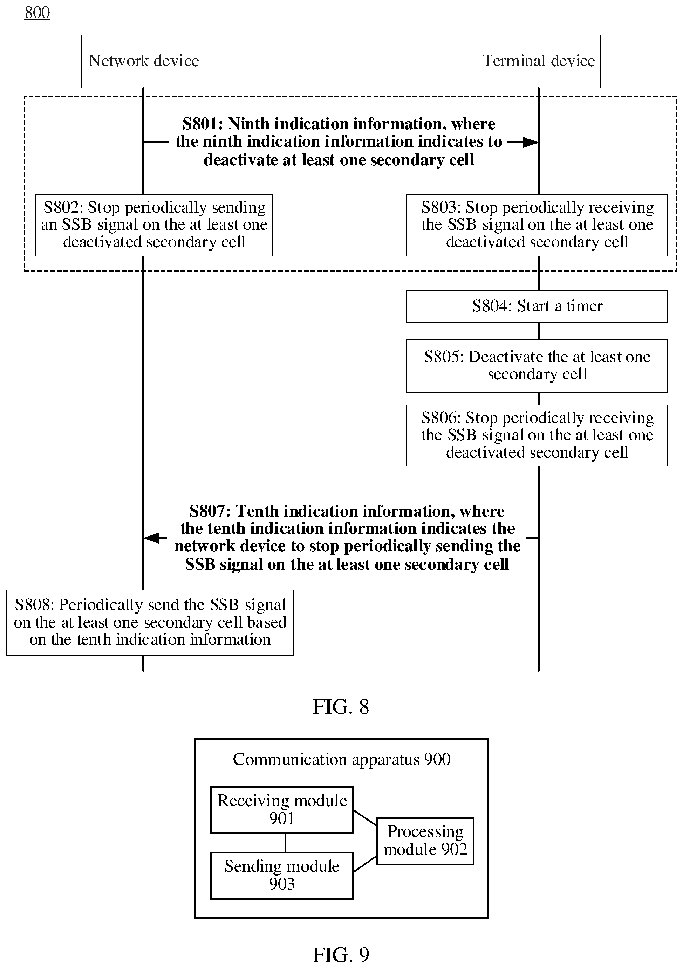

FIG. 8 is a diagram of a sixth communication method 800 according to an embodiment of this application. FIG. 8 shows a schematic procedure of information exchange between a network device and a terminal device. It should be noted that the method 800 shown in FIG. 8 is another procedure after a secondary cell is activated. Specifically, the method 800 shown in FIG. 8 may be used in combination with the method 400 shown in FIG. 4, the method 500 shown in FIG. 5, the method 600 shown in FIG. 6, or the method 700 shown in FIG. 7. The method 800 includes the following plurality of steps.

After data transmission between the network device and the terminal device ends, or when there is no data transmission between the network device and the terminal device, a procedure of deactivating the secondary cell may be performed. In this solution, the procedure of deactivating the secondary cell may be triggered by the network device, or the procedure of deactivating the secondary cell may be triggered by the terminal device. This is not limited in this application.

When the procedure of deactivating the secondary cell is triggered by the network device, the method 800 includes S801 to S803.

S801: The network device sends ninth indication information to the terminal device, where the ninth indication information indicates to deactivate at least one secondary cell.

Specifically, when the network device determines, based on current service transmission, that there is no service transmission with the terminal device on the at least one secondary cell, the network device sends the ninth indication information to the terminal device. The ninth indication information includes identification information of a secondary cell corresponding to at least one deactivated secondary cell, and indicates the terminal device to deactivate the at least one secondary cell. Optionally, the ninth indication information is carried in MAC CE signaling.

S802: The network device stops periodically sending an SSB signal on the at least one deactivated secondary cell.

It should be noted that a sequence of S801 and S802 is not limited in this application. The network device may stop periodically sending the SSB signal on the at least one deactivated secondary cell after the network device sends the ninth indication information to the terminal device; the network device may first stop periodically sending the SSB signal on the at least one deactivated secondary cell, and then send the ninth indication information to the terminal device; or when sending the ninth indication information to the terminal device, the network device may stop periodically sending the SSB signal on the at least one deactivated secondary cell.

S803: The terminal device stops periodically receiving the SSB signal on the at least one deactivated secondary cell.

Specifically, after receiving the ninth indication information, the terminal device stops, based on the eighth indication information, monitoring the SSB signal on the deactivated secondary cell.

When the procedure of deactivating the secondary cell is triggered by the terminal device, the method 800 includes S804 to S808.

S804: The terminal device starts a timer.

Specifically, after the terminal device reports a third measurement result to the network device, or after the terminal device completes data transmission, the terminal starts the timer.

S805: The terminal device deactivates at least one secondary cell.

Specifically, when the terminal device does not receive, within predefined time of the timer set by the terminal device, data transmitted by the network device on the secondary cell, the terminal device deactivates the at least one secondary cell.

S806: The terminal device stops periodically receiving an SSB signal on the at least one deactivated secondary cell.

S807: The terminal device sends tenth indication information to the network device, where the tenth indication information indicates the network device to stop periodically sending the SSB signal on the at least one deactivated secondary cell, and the tenth indication information includes identification information of a secondary cell corresponding to the at least one deactivated secondary cell.

It should be noted that a sequence of S806 and S808 is not limited in this application. The terminal device may send the tenth indication information to the network device after stopping periodically receiving the SSB signal on the at least one secondary cell; the terminal device may first send the tenth indication information to the network device, and then stop receiving the SSB signal; or when sending the tenth indication information to the network device, the terminal device may stop receiving the SSB signal.

S808: The network device stops, based on the tenth indication information, periodically sending the SSB signal on the at least one deactivated secondary cell.

Specifically, after receiving the tenth indication information, the network device determines deactivated secondary cells based on the identification information in the tenth indication information, and stops monitoring the SSB signal on these secondary cells.

It should be understood that sequence numbers of the foregoing processes do not mean execution sequences. The execution sequences of the processes should be determined based on functions and internal logic of the processes, and should not be construed as any limitation on implementation processes of embodiments of this application.

It should be further understood that, in embodiments of this application, unless otherwise stated or there is a logic conflict, terms and/or descriptions in different embodiments are consistent and may be mutually referenced, and technical features in different embodiments may be combined into a new embodiment based on an internal logical relationship thereof.

It should be further understood that in some of the foregoing embodiments, a device in a conventional network architecture is mainly used as an example for description (for example, the network device and the terminal device). It should be understood that a specific form of the device is not limited in embodiments of this application. For example, all devices that can implement a same function in the future are applicable to embodiments of this application.

It may be understood that, in the foregoing method embodiments, methods and operations implemented by a device (for example, a network device or a terminal device) may alternatively be implemented by a component (for example, a chip or a circuit) of the device. This is not limited.

The methods provided in embodiments of this application are described above in detail with reference to FIG. 3 to FIG. 8. An apparatus and a chip system provided in embodiments of this application are described below in detail with reference to FIG. 9 to FIG. 12. It should be understood that descriptions of apparatus embodiments correspond to the descriptions of the method embodiments. Therefore, for content that is not described in detail, refer to the foregoing method embodiments. For brevity, details are not described herein.

The communication methods in FIG. 3 to FIG. 8 are mainly described from a perspective of interaction between the terminal device and the network device. It may be understood that, to implement the foregoing functions, the terminal device and the network device include corresponding hardware structures and/or software modules for performing the functions.

It may be understood that, to implement the functions in the foregoing embodiments, the network device and the terminal device include corresponding hardware structures and/or software modules for performing the functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

FIG. 9 is a schematic block diagram of a communication apparatus 900 according to an embodiment of this application. For example, the base station 110a or 110b shown in FIG. 1 may be a module (for example, a chip) used in the base station. Specifically, the communication apparatus 900 includes a receiving module 901. The receiving module 901 may be configured to implement a corresponding receiving function. The receiving module 901 may also be referred to as a receiving unit. The communication apparatus 900 further includes a processing module 902. The processing module 902 may be configured to implement a corresponding processing function. The communication apparatus 900 further includes a sending module 903. The sending module 903 may be configured to implement a corresponding sending function. The sending module 903 may also be referred to as a sending unit. The receiving module 901 and the sending module 903 may also be referred to as a communication interface or a communication unit.

Optionally, the communication apparatus 900 further includes a storage unit. The storage unit may be configured to store instructions and/or data, and the processing module 902 may read the instructions and/or the data in the storage unit, to cause the communication apparatus 900 to implement actions of the network device in the foregoing method embodiments.

The communication apparatus 900 may be configured to perform actions performed by the network device in the foregoing method embodiment 300 to method embodiment 800. In this case, the communication apparatus 900 may be a component of the network device. The receiving module 901 is configured to perform receiving-related operations of the network device in the foregoing method embodiment. The processing module 902 is configured to perform processing-related operations of the network device in the foregoing method embodiment 300 to method embodiment 800. The sending module 903 is configured to perform sending-related operations of the network device in the foregoing method embodiment 300 to method embodiment 800.

In an embodiment, the communication apparatus 900 may be configured to perform operations of the network device in FIG. 3 to FIG. 8.

For example, the sending module 903 is configured to periodically send an SSB signal on at least one candidate cell, and send first configuration information to the terminal device, where the first configuration information includes identification information of at least one cell, the first configuration information indicates to configure, as a secondary cell, at least one cell corresponding to the identification information of the at least one cell, and the at least one cell is determined from the at least one candidate cell based on the first measurement result;
the receiving module 901 is configured to receive a first measurement result from the terminal device, where the first measurement result is generated by measuring the SSB signal; and
the processing module 902 is configured to stop periodically sending the SSB signal.

It should be understood that a specific process in which the modules perform the foregoing corresponding steps has been described in detail in the foregoing method embodiments. For brevity, details are not described herein again.

In addition, the receiving module 901, the processing module 902, and the sending module 903 in the communication apparatus 900 may further implement other operations or functions of the network device in the foregoing methods. Details are not described herein again.

Optionally, the communication apparatus 900 may be a device including the network device, or a component configured in the network device, for example, a chip of the network device. In this case, the receiving module 901 and the sending module 903 may be interface circuits, pins, or the like. Specifically, the interface circuit may include an input circuit and an output circuit. The receiving module 901 may include an input circuit, the sending module 903 may include an output circuit, and the processing module 902 may include a processing circuit.

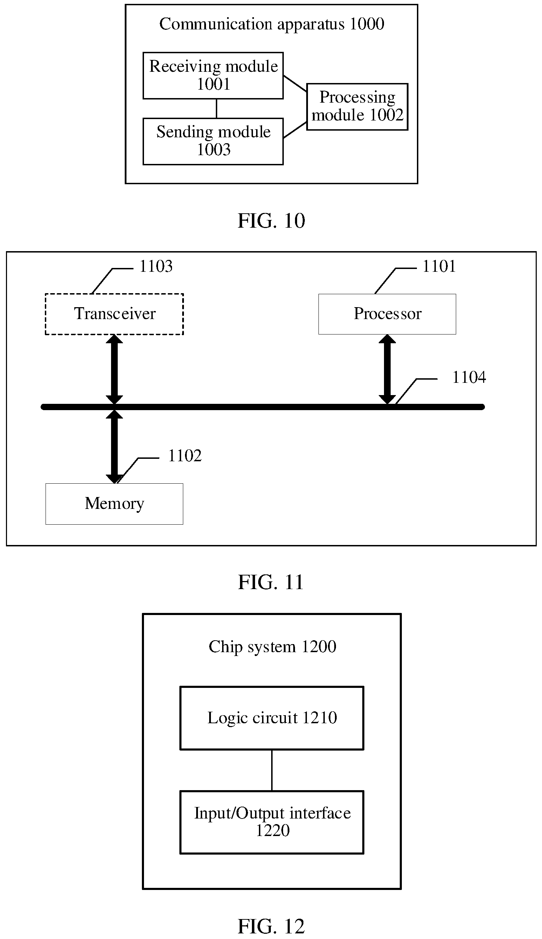

FIG. 10 is a schematic block diagram of a communication apparatus 1000 according to an embodiment of this application. For example, one of the terminals 120a to 120j shown in FIG. 1 may alternatively be a module (for example, a chip) used in a terminal. Specifically, the communication apparatus 1000 includes a receiving module 1001. The receiving module 1001 may be configured to implement a corresponding receiving function. The receiving module 1001 may also be referred to as a receiving unit. The communication apparatus 1000 further includes a processing module 1002. The processing module 1002 may be configured to implement a corresponding processing function. The communication apparatus 1000 further includes a sending module 1003. The sending module 1003 may be configured to implement a corresponding sending function. The sending module 1003 may also be referred to as a sending unit. The receiving module 1001 and the sending module 1003 may also be referred to as a communication interface or a communication unit.

Optionally, the communication apparatus 1000 further includes a storage unit. The storage unit may be configured to store instructions and/or data, and the processing module 1002 may read the instructions and/or the data in the storage unit, to cause the communication apparatus 1000 to implement actions of the terminal device in the foregoing method embodiments.

The communication apparatus 1000 may be configured to perform actions performed by the terminal device in the foregoing method embodiment 300 to method embodiment 800. In this case, the communication apparatus 1000 may be a component of the terminal device. The receiving module 1001 is configured to perform receiving-related operations of the terminal device in the foregoing method embodiment. The processing module 1002 is configured to perform processing-related operations of the terminal device in the foregoing method embodiment 300 to method embodiment 800. The sending module 1003 is configured to perform sending-related operations of the terminal device in the foregoing method embodiment 300 to method embodiment 800.

In an embodiment, the communication apparatus 1000 may be configured to perform operations of the network device in FIG. 3 to FIG. 8.

For example, the receiving module 1001 is configured to periodically receive an SSB signal and receive first configuration information on at least one candidate cell, where the first configuration information includes identification information of at least one cell, the first configuration information indicates to configure, as a secondary cell, at least one cell corresponding to the identification information of the at least one cell, and the at least one cell is determined from the at least one candidate cell based on the first measurement result;
the sending module 1003 is configured to send a first measurement result to a network device, where the first measurement result is generated by measuring the SSB signal; and
the processing module 1002 is configured to stop periodically receiving the SSB signal.

It should be understood that a specific process in which the modules perform the foregoing corresponding steps has been described in detail in the foregoing method embodiments. For brevity, details are not described herein again.

In addition, the receiving module 1001, the processing module 1002, and the sending module 1003 in the communication apparatus 1000 may further implement other operations or functions of the terminal device in the foregoing methods. Details are not described herein again.

Optionally, the communication apparatus 1000 may be a device including the terminal device, or a component configured in the terminal device, for example, a chip of the terminal device. In this case, the receiving module 1001 and the sending module 1003 may be interface circuits, pins, or the like. Specifically, the interface circuit may include an input circuit and an output circuit. The receiving module 1001 may include an input circuit, the sending module 1003 may include an output circuit, and the processing module 1002 may include a processing circuit.

FIG. 11 is a diagram of a structure of a communication apparatus 1100 according to an embodiment of this application. The communication apparatus 1100 may include a processor 1101 and a memory 1102. The memory 1102 is coupled to the processor 1101, and the processor 1101 is configured to execute a computer program or instructions and/or data stored in the memory 1102, so that one of the method 300 to the method 800 in the foregoing method embodiments is performed. The memory 1102 is configured to store the computer program or the instructions and/or the data. The coupling in this embodiment of this application may be an indirect coupling or a communication connection between apparatuses, units, or modules in an electrical form, a mechanical form, or another form, and is used for information exchange between the apparatuses, the units, or the modules. The processor 1101 may cooperate with the memory 1102.

Optionally, the communication apparatus 1100 may include one or more processors 1101, and one or more memories 1102.

Optionally, the memory 1102 and the processor 1101 are integrated together, or disposed separately.

The communication apparatus 1100 may further include a transceiver 1103, configured to exchange information through a transmission medium. Optionally, the transceiver 1103 may be an interface, a bus, a circuit, or an apparatus that can implement sending and receiving functions.

Optionally, a component configured to implement a receiving function in the transceiver 1103 may be considered as a receiving module, and a component configured to implement a sending function in the transceiver 1103 may be considered as a sending module. In other words, the transceiver 1103 includes a receiver and a transmitter.

A specific connection medium between the processor 1101, the memory 1102, and the transceiver 1103 is not limited in this embodiment of this application. In this embodiment of this application, the processor 1101, the memory 1102, and the transceiver 1103 are connected through a bus 1104 in FIG. 11. The bus is represented by a bold line in FIG. 11. A connection manner between other components is merely an example for description, and is not limited thereto. The bus may be classified into an address bus, a data bus, a control bus, and the like.

It should be understood that, for ease of representation, only one bold line is used to represent the bus in FIG. 11, but this does not mean that there is only one bus or only one type of bus.

Optionally, as shown in FIG. 11, the communication apparatus 1100 may further include the transceiver 1103 and/or a communication interface. The transceiver 1103 and/or the communication interface are/is configured to receive a signal and/or send a signal. For example, the processor 1101 is configured to control the transceiver 1103 and/or the communication interface to receive data and/or send data.

The transceiver may also be sometimes referred to as a transceiver machine, a transceiver module, a transceiver circuit, or the like. The receiver may also be sometimes referred to as a receiver machine, a receiving module, a receiver circuit, or the like. The transmitter sometimes may also be referred to as a transmitter machine, a transmitter, a transmitting module, a transmitting circuit, or the like.

For example, in an embodiment, the processor 1101 is configured as another operation or function of a chip of the network device. The transceiver 1103 is configured to implement information exchange between the communication apparatus 1100 and a terminal device.

In another embodiment, the processor 1101 is configured to perform another operation or function of a chip of the terminal device. The transceiver 1103 is configured to implement information exchange between the communication apparatus 1100 and a network device.

FIG. 12 is a diagram of a chip system 1200 according to an embodiment of this application. The chip system 1200 (or may be referred to as a processing system) includes a logic circuit 1210 and an input/output interface (input/output interface) 1220.

The logic circuit 1210 may be a processing circuit in the chip system 1200. The logic circuit 1210 may be coupled to a storage unit, and invoke instructions in the storage unit, so that the chip system 1200 can implement the method and functions in embodiments of this application. The input/output interface 1220 may be an input/output circuit in the chip system 1200, and outputs information processed by the chip system 1200, or inputs to-be-processed data or signaling information to the chip system 1200 for processing.

Optionally, the logic circuit 1210 may be implemented by one or more processors, including the one or more processors or a processing part of the one or more processors.

Optionally, the input/output interface 1220 may include a transceiver circuit, a transceiver, an input/output circuit, or a communication interface.

In a solution, the chip system 1200 is configured to implement the operations performed by the network device or the terminal device in the foregoing method embodiments.

For example, the logic circuit 1210 is configured to implement a processing-related operation performed by the network device or the terminal device in the foregoing method embodiments, and the input/output interface 1220 is configured to implement a sending-related operation and/or a receiving-related operation performed by the network device or the terminal device in the foregoing method embodiments.

An embodiment of this application further provides a computer-readable storage medium. The computer-readable storage medium stores computer instructions used for implementing the method performed by the network device or the terminal device in the foregoing method embodiments.

For example, when a computer program is executed by a computer, the computer is caused to implement the method performed by the network device or the terminal device in the foregoing method embodiments.

An embodiment of this application further provides a computer program product, including instructions. When the instructions are executed by a computer, the method performed by the network device or the terminal device in the foregoing method embodiments is implemented.

An embodiment of this application further provides a communication system. The communication system includes the terminal device and/or the network device in the foregoing embodiments. For example, the system includes the terminal device and the network device in FIG. 1.

For explanations and beneficial effects of related content in any one of the apparatuses provided above, refer to the corresponding method embodiment provided above. Details are not described herein again.

In the several embodiments provided in this application, it should be understood that the disclosed apparatus and method may be implemented in other manners. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (solid-state disk, SSD)), or the like. For example, the usable medium may include but is not limited to any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
sending a synchronization signal and physical broadcast channel block SSB signal periodically on at least one candidate cell;
receiving a first measurement result from a terminal device, wherein the first measurement result is generated by measuring the SSB signal;
stopping sending the SSB signal periodically; and
sending first configuration information to the terminal device, wherein the first configuration information comprises identification information of at least one cell, the first configuration information indicates to configure, as a secondary cell, at least one cell corresponding to the identification information of the at least one cell, and the at least one cell is determined from the at least one candidate cell based on the first measurement result.

2. The communication method according to claim 1, further comprising:
receiving first indication information from the terminal device, wherein the first indication information indicates to send the SSB signal periodically on the at least one secondary cell;
sending the SSB signal periodically on the at least one secondary cell based on the first indication information; and
sending second indication information to the terminal device, wherein the second indication information indicates to activate the at least one secondary cell.

3. The communication method according to claim 2, wherein before the sending the second indication information to the terminal device, further comprising:
receiving a second measurement result from the terminal device, wherein the second measurement result is generated by measuring the SSB signal on the at least one secondary cell.

4. The communication method according to claim 1, further comprising:
sending the SSB signal periodically on the at least one secondary cell;
sending third indication information to the terminal device, wherein the third indication information indicates the terminal device to receive the SSB signal periodically on the at least one secondary cell; and
sending fourth indication information to the terminal device, wherein the fourth indication information indicates to activate the at least one secondary cell.

5. The communication method according to claim 4, wherein before the sending the fourth indication information to the terminal device, further comprising:
receiving a third measurement result from the terminal device, wherein the third measurement result is generated by measuring the SSB signal on the at least one secondary cell.

6. The communication method according to any one of claims 2 to 5, further comprising:
sending configuration information of the SSB signal on the at least one secondary cell to the terminal device.

7. The communication method according to claim 6, wherein the configuration information of the SSB signal on the at least one secondary cell and the first configuration information are carried in a same message.

8. A communication method, comprising:
receiving a synchronization signal and physical broadcast channel block SSB signal periodically on at least one candidate cell;
sending a first measurement result to a network device, wherein the first measurement result is generated by measuring the SSB signal;
stopping receiving the SSB signal periodically; and
receiving first configuration information from the network device, wherein the first configuration information comprises identification information of at least one cell, the first configuration information indicates to configure, as a secondary cell, at least one cell corresponding to the identification information of the at least one cell, and the at least one cell is determined from the at least one candidate cell based on the first measurement result.

9. The communication method according to claim 8, further comprising:
sending first indication information to the network device, wherein the first indication information indicates the network device to send the SSB signal periodically on the at least one secondary cell;
receiving the SSB signal periodically on the at least one secondary cell based on the first indication information; and
receiving second indication information from the network device, wherein the second indication information indicates to activate the at least one secondary cell.

10. The communication method according to claim 9, wherein before the receiving the second indication information from the network device, further comprising:
sending a second measurement result to the network device, wherein the second measurement result is generated by measuring the SSB signal on the at least one secondary cell.

11. The communication method according to claim 8, further comprising:
receiving third indication information from the network device, wherein the third indication information indicates to receive the SSB signal on the at least one secondary cell;
receiving the SSB signal periodically on the at least one secondary cell based on the third indication information; and
receiving fourth indication information from the network device, wherein the fourth indication information indicates to activate the at least one secondary cell.

12. The communication method according to claim 11, wherein before the receiving the fourth indication information from the network device, further comprising:
sending a third measurement result to the network device, wherein the third measurement result is generated by measuring the SSB signal on the at least one secondary cell.

13. The communication method according to any one of claims 9 to 12, further comprising:
receiving configuration information of the SSB signal on the at least one secondary cell from the network device.

14. The communication method according to claim 13, wherein the configuration information of the SSB signal on the at least one secondary cell and the first configuration information are carried in a same message.

15. A communication apparatus, comprising a module or a unit configured to perform the method according to any one of claims 1 to 7, or comprising a module or a unit configured to perform the method according to any one of claims 8 to 14.

16. A communication apparatus, comprising a processor and an interface circuit, wherein the interface circuit is configured to receive a signal from a communication apparatus other than the communication apparatus and transmit the signal to the processor, or send a signal from the processor to a communication apparatus other than the communication apparatus; and the processor is configured to implement the method according to any one of claims 1 to 7 by using a logic circuit or by executing code instructions; or the processor is configured to implement the method according to any one of claims 8 to 14 by using a logic circuit or by executing code instructions.

17. A computer-readable storage medium, wherein the storage medium stores a computer program or instructions, and when the computer program or the instructions are executed by a communication apparatus, the method according to any one of claims 1 to 7 is implemented, or the method according to any one of claims 8 to 14 is implemented.

18. A computer program product, comprising a computer program, wherein when the computer program is run, the method according to any one of claims 1 to 7 is implemented, or the method according to any one of claims 8 to 14 is implemented.

19. A chip, comprising a processor, wherein the processor is coupled to a memory, the memory is configured to store a computer program, and the processor is configured to execute the computer program stored in the memory to implement the method according to any one of claims 1 to 7, or the processor is configured to execute the computer program stored in the memory to implement the method according to any one of claims 8 to 14.
